# EUROPEAN PATENT APPLICATION

(11) **EP 1 657 135 A2**
(43) Date of publication of application: **17.05.2006**
(21) Application number: 05110628.4
(22) Date of filing: 11.11.2005
(51) Int. Cl.: B62B 15/00

(54) **Vehicle of the sledge type with wheels or rollers for descending slopes**

(30) Priority: 12.11.2004 IT TO20040798
(71) Applicant: Dell'Amico, Alfredo, 10015 Ivrea (IT); Naretto, Silvio, 10090 Frazione Villate, Mercenasco TO (IT); Durisotti, Ignazio, 10010 Salerano TO (IT)
(72) Inventor: Dell'Amico, Alfredo, 10015 Ivrea (IT); Naretto, Silvio, 10090 Frazione Villate, Mercenasco TO (IT); Durisotti, Ignazio, 10010 Salerano TO (IT)
(74) Representative: Fioravanti, Corrado

(57) **Abstract**

A vehicle of the sledge or bobsleigh type is provided in its lower part with idle wheels or rollers for descending slopes. A first set of inner rollers (22-29) is positioned in the proximity of a longitudinal midline (x) of the vehicle (10); a second set of right-hand outer rollers (40-43) is positioned along a right-hand side of the vehicle, and is higher than the first set of inner rollers (22-29); a third set of left-hand outer rollers (44-47) is positioned along a left-hand side of the vehicle so as to be symmetrical to the second set of right-hand outer rollers (40-43).

The rollers of the second (40-43) and third (44-47) set are mounted on respective rotation axles (30-33; 34-37), where
- the axles (30-33) of the second set of right-hand outer rollers (40-43) lie on an oblique plane (P1) inclined outwards to the right and upwards, and converge towards a point (C1) located outside the right-hand side of the vehicle, and
- the axles (34-37) of the third set of left-hand outer rolling elements (44-47) lie on an oblique plane (P2) inclined outwards to the left and upwards, and converge towards a point (C2) located outside the left-hand side of the vehicle.

## Description

The present invention relates to a vehicle of the sledge type with wheels or rollers for descending slopes, of the type defined in the preamble of Claim 1.

There are currently known vehicles of the sledge or bobsleigh type, provided in their lower parts with wheels or rollers or other rolling elements for descending slopes; see, for example, the French patent application published under the number FR-2833181. This publication describes a vehicle provided with a set of central rollers which are positioned along the midline of the vehicle, and which are always in contact with the ground, and two sets of lateral rolling elements, positioned on the left and on the right, which come into contact with the ground when it is desired to follow a curved path. In order to follow a curved path, the driver has to incline the vehicle to one side, by lowering it on the side opposite that towards which he desires to turn, in such a way as to bring the left-hand rolling elements into contact with the ground in order to turn towards the right, and vice versa. At the same time, however, the driver must also shift his weight to the opposite side, in other words towards the inside of the curve, to counterbalance the destabilizing centrifugal force. This obliges the driver to take up an awkward position, and requires a less intuitive form of steering. The French patent application FR-2833181 also proposes the provision of a swinging seat for the purpose of constantly remaining in a horizontal position.

Other vehicles and equipment for descending slopes are described in patent publications US-2219905, US-4145064, US-4887824, US-6209894 and US-6237960.

The object of the present invention is to provide a vehicle of the aforementioned type which can be driven in a way which is easier, intuitive and efficient, as well as being enjoyable. Another object of the invention is to provide a vehicle which does not oblige the driver to take up awkward positions in order to follow curved paths.

According to the present invention, these objects are achieved by a vehicle having the characteristics defined in the attached claims.

A preferred, but not restrictive, embodiment of the invention will now be described with reference to the attached drawings, in which:
- Fig. 1 is a perspective view of a vehicle according to the invention;
- Fig. 2 is a perspective view of a chassis with wheels for the vehicle of Fig. 1;

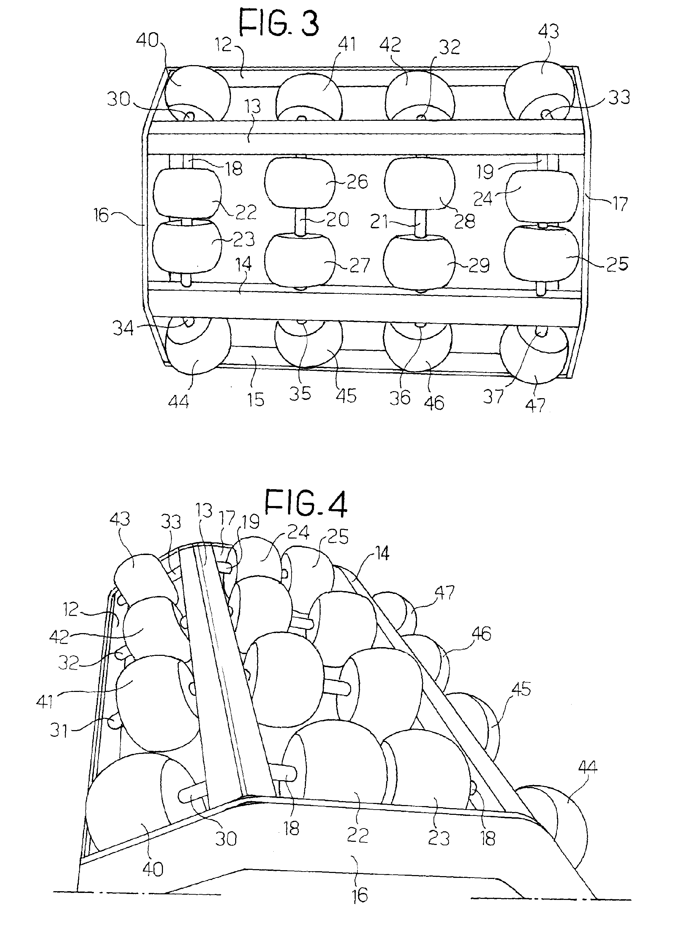

- Fig. 3 is a view from below of the chassis with wheels of Fig. 2;
- Fig. 4 is a perspective view of the chassis with wheels of Fig. 2 in an inverted position; and
- Fig. 5 is a geometrical diagram of the chassis of Fig. 2.

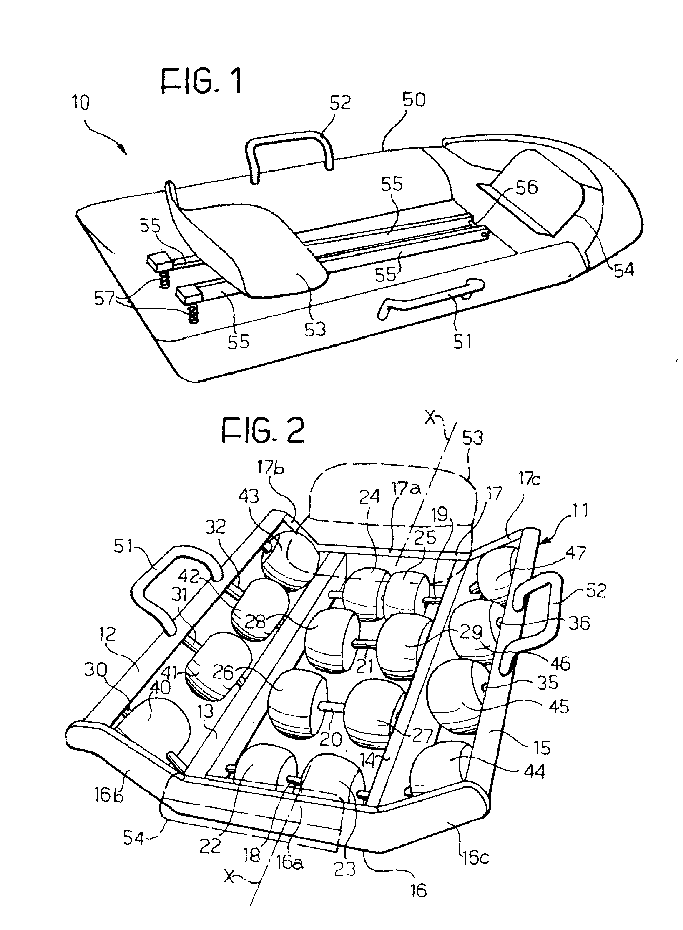

With reference in the first place to Figures 1 and 2, the reference numeral 10 indicates overall a vehicle according to the present invention, which is used for descending slopes in a seated position. The vehicle 10 comprises a rigid cradlelike chassis 11 (Fig. 2) which has four horizontal longitudinal bars 12-15 parallel to each other, of which the two inner longitudinal bars 13 and 14 are positioned at a lower level than the two outer longitudinal bars 12 and 15.

Throughout the present description and the following claims, the terms and expressions indicating positions and orientations are to be interpreted as referring to the longitudinal median axis x of the vehicle 10. Thus the expression "inner side" indicates a side facing the midline of the vehicle, and the expression "outer side" indicates a side facing a lateral edge of the vehicle.

The ends of the bars 12-15 are fixed rigidly to a front transverse bar 16 and to a rear transverse bar 17. Each of the transverse bars 16 and 17 has, respectively, a substantially horizontal inner portion 16a, 17a and two outer lateral portions 16b, 16c and 17b, 17c, inclined obliquely upwards and outwards.

A plurality of idle wheels or rollers is mounted on the chassis 11, as described below.

In the illustrated example, four horizontal transverse axles 18-21 parallel to each other, namely a front axle 18, a rear axle 19 and two central axles 20 and 21, are mounted between the inner longitudinal bars 13, 14. A pair of idle wheels is mounted on each axle. On the front axle 18 and on the rear axle 19 there are mounted respective pairs of wheels 22, 23 and 24, 25, positioned transversely nearer to the midline of the vehicle. On the central axles 20 and 21 there are mounted respective pairs of wheels 26, 27 and 28, 29, spaced transversely away from the midline of the vehicle.

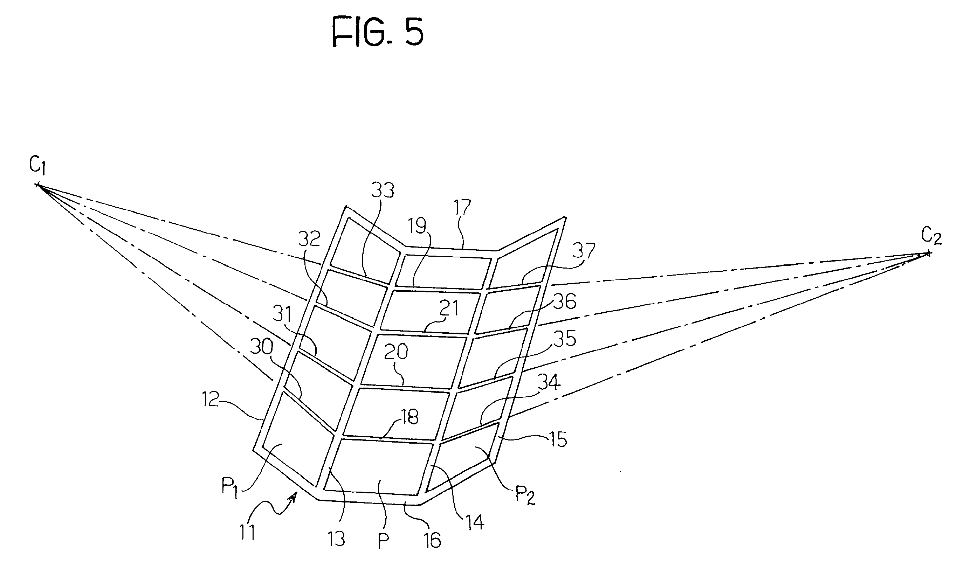

Between the inner bar 13 and the outer bar 12 there are mounted four axles 30-33, lying on an oblique plane P1 (Figure 5) which contains the bars 12 and 13 and the oblique portions 16b and 17b and which is inclined externally upwards by approximately 30° from the horizontal plane P marked by the inner bars 13, 14. The oblique axles 30-33 converge towards a geometrical point C1 located laterally outside the vehicle 10. Preferably, the point C1 is located a few metres beyond the outer bar 12. On each of the oblique axles 30-33 there is mounted a respective idle wheel 40-43. In the illustrated example, all the wheels of the set of wheels 40-43, defined here as the right-hand outer wheels, are located on an arc with a centre of curvature C1.

Between the inner bar 14 and the outer bar 15 there are mounted four oblique axles 34-37 with respective wheels 44-47, in a configuration symmetrical to that described above for the wheels 40-43 about a median vertical longitudinal plane. The axles 34-37 of the left-hand outer wheels 44-47 lie on an oblique plane P2 and converge to define a centre of curvature C2 located symmetrically to the point C1 on the opposite side of the vehicle 10.

Preferably, all the wheels are in the form of convex rollers, with rolling surfaces having curved profiles in axial section.

The vehicle 10 has an outer shell 50 fixed on the chassis 11, two lateral hand grips 51, 52, a seat 53 and a front footrest 54 which is longitudinally adjustable. In the embodiment shown in Figure 1, the seat 53 is fixed to a pair of bars 55 hinged frontally about a horizontal transverse axle 56. The rear ends of the bars 55 rest on a pair of coil springs 57. When the driver climbs on to the seat, the driver's weight compresses the springs 57 and causes the lowering of the seat and, by means of a mechanism (not shown), disengages a brake (not shown) from the ground.

To drive the vehicle 10 according to the invention, the driver must place his weight centrally to go straight ahead. To turn, the driver simply has to shift his weight to the side to which he wishes to turn, in other words towards the right-hand side to turn right, or towards the left-hand side to turn left. During these simple manoeuvres, as described below, the driver keeps a firm hold on the hand grips 51, 52.

When the vehicle 10 is to be made to descend a slope in a straight line, the driver has to keep his weight centrally on the midline of the vehicle. In this condition, the driver's weight is distributed over the inner wheels 22-29, while the outer or lateral wheels 40-43 and 44-47 are all raised and do not contact the ground, because of the inclination of the axles 30-33 and 34-37.

When the vehicle is to be made to turn to the right, the driver has to shift his weight to the right, thus inclining the vehicle laterally to the right. This movement causes the left-hand side of the vehicle to rise. The left-hand lateral or outer wheels 44-47 and the left-hand inner wheels 23, 27, 29 and 25 are raised. The wheels in contact with the ground are now the right-hand lateral or outer wheels 40-43 and the central right-hand inner wheels 26 and 28. The front wheel 22 and the rear wheel 24 of the set of right-hand inner wheels are slightly raised and do not contact the ground, because of the more transversely inward position in which they are placed.

It should be noted that, owing to the positioning of the wheels and the inclination of the axles of the wheels as described above, when the vehicle is inclined laterally to turn right, the right-hand outer wheels 40-43, being positioned along an arc, steer the vehicle to the right. Because of the convex shape of the right-hand inner central wheels 26 and 28, and the fact that their respective axles 20 and 21 are longitudinally close to each other and to the right-hand centre of curvature C1, the vehicle is enabled to follow the rightward curving path, thus contributing to the transverse stability of the vehicle. Since they are raised, the front wheels 22 and rear wheels 24 of the set of right-hand inner wheels do not significantly oppose this curved path. Clearly, if the driver shifts his weight farther to the right, the lateral inclination of the vehicle can increase further and the wheels 26 and 28 can also be temporarily raised.

In a similar way to what is described above, in order to make a turn to the left the driver has to shift his weight laterally towards the left-hand side so as to bring the left-hand outer wheels 44-47 and the left-hand inner central wheels 27 and 29 into contact with the ground, while raising the right-hand outer wheels 40-43, the right-hand inner wheels 22, 24, 26, 28, the left-hand inner front wheel 23 and the left-hand inner rear wheel 25.

As can be appreciated, the vehicle according to the invention offers a form of driving which is more natural, immediate and enjoyable, and which does not force the driver to take up awkward positions in order to make turns.

It is to be understood that the invention is not limited to the embodiment described and illustrated herein, which is to be considered as an example of embodiment of the vehicle; in fact, the invention can be modified in respect of the form and arrangements of parts and details of construction, and in respect of its operation. In particular, the number of wheels can be different from what is illustrated above. For example, in a less preferable embodiment (not shown) it is possible to provide only two or three right- or left-hand outer wheels, and/or to provide a single central wheel instead of the two inner central left-hand and right-hand wheels.

## Claims

1. A vehicle (10) of the sledge or bobsleigh type, provided in its lower part with idle rolling elements for descending slopes, comprising:
a first plurality of inner rolling elements (22-29) positioned in the proximity of a longitudinal midline (x) of the vehicle (10);
a second plurality of right-hand outer rolling elements (40-43) positioned along a right-hand side of the vehicle, and higher than the first plurality of inner rolling elements (22-29), and
a third plurality of left-hand outer rolling elements (44-47) positioned along a left-hand side of the vehicle so as to be symmetrical to the second plurality of right-hand outer rolling elements (40-43);
**characterized in that** the rolling elements of the second (40-43) and third (44-47) pluralities of rolling elements are wheels or rollers mounted on respective rotation axles (30-33; 34-37), where
the axles (30-33) of the second plurality of right-hand outer rolling elements (40-43) lie on an oblique plane (P1) inclined outwards to the right and upwards, and substantially converge towards a point (C1) located outside the right-hand side of the vehicle, and
the axles (34-37) of the second plurality of left-hand outer rolling elements (44-47) lie on an oblique plane (P2) inclined outwards to the left and upwards, and substantially converge towards a point (C2) located outside the left-hand side of the vehicle.

2. A vehicle according to Claim 1, **characterized in that** the first plurality of inner rolling elements (22-29) comprises:
a pair of front wheels or rollers (22, 23) mounted on a first transverse horizontal rotation axle (18) on opposite sides of the longitudinal midline (x) of the vehicle and located transversely near the midline (x),
a pair of rear wheels or rollers (24, 25) mounted on a second transverse horizontal rotation axle (19) on opposite sides of the longitudinal midline (x) of the vehicle and located transversely near the midline (x), and
at least one pair of intermediate wheels or rollers (26, 27, 28, 29) mounted on at least one further transverse horizontal rotation axle (20, 21) on opposite sides of the longitudinal midline (x) of the vehicle and transversely farther away from each other than the said pairs of front and rear wheels or rollers, the said further rotation axle (20, 21) being intermediate between the first (18) and the second (19) rotation axle.

3. Vehicle according to Claim 2, **characterized in that** it comprises two pairs of intermediate wheels or rollers (26, 27, 28, 29) mounted on two respective further transverse horizontal rotation axles (20, 21), where
the further rotation axles (20, 21) are spaced apart from each other longitudinally,
the further rotation axles (20, 21) are intermediate between the first (18) and the second (19) rotation axle, and
the wheels or rollers of each individual pair of intermediate wheels or rollers (26, 27, 28, 29) are mounted on opposite sides of the longitudinal midline (x) and are transversely spaced farther away from each other than the said pairs of front and rear wheels or rollers (26, 27, 28, 29).

4. Vehicle according to any one of the preceding claims, **characterized in that** the said rolling elements comprise convex rollers, with rolling surfaces having curved profiles in axial section.
